# EUROPÄISCHE PATENTSCHRIFT

(11) **EP 0 924 386 B1**
(45) Veröffentlichungstag und Bekanntmachung des Hinweises auf die Patenterteilung: **05.02.2003**
(21) Anmeldenummer: 97811017.9
(22) Anmeldetag: 23.12.1997
(51) Int. Cl.: F01D 11/02, F16J 15/447

(54) **Verfahren und Vorrichtung zum berührungsfreien Abdichten eines zwischen einem Rotor und einem Stator ausgebildeten Trennspalts**
Method and device to seal off the space between a rotor and a stator
Méthode et dispositif d'étanchéité pour isoler l'espace entre un rotor et un stator

(43) Veröffentlichungstag der Anmeldung: 23.06.1999
(73) Patentinhaber: ABB Turbo Systems AG, 5400 Baden (CH)
(72) Erfinder: Bothien, Mihajlo, Dr., 79761 Waldshut-Tiengen (DE); Bremer, Joachim, 8055 Zürich (CH); Greber, Jürg, 5430 Wettingen (CH); Loos, Markus, 5400 Baden (CH); Müller, Ulf, Dr., 5416 Kirchdorf (CH); Wunderwald, Dirk, Dr., 5400 Baden (CH)
(74) Vertreter: ABB Patent Attorneys

(56) Entgegenhaltungen:
- FR-A- 605 508
- GB-A- 532 992
- GB-A- 684 428
- US-A- 1 505 647
- US-A- 4 513 975

## Beschreibung

### Technisches Gebiet

Die Erfindung betrifft ein Verfahren zum berührungsfreien Abdichten eines zwischen einem Rotor und einem Stator ausgebildeten Trennspalts gegen das Durchströmen eines den Trennspalt beaufschlagenden Arbeitsfluids, gemäss dem Oberbegriff des Anspruchs 1, und eine Vorrichtung zur Durchführung des Verfahrens, gemäss dem Oberbegriff des Anspruchs 3.

### Stand der Technik

Im Strömungsmaschinenbau werden zur Abdichtung mit hoher Drehzahl rotierender Bauteile häufig Labyrinthe, d.h. berührungsfreie Bewegungsdichtungen eingesetzt. Bekannt ist eine Vielzahl unterschiedlichster Labyrinthdichtungen, deren Wirkprinzip jedoch stets darauf beruht, den Fluid-Massenstrom durch das Labyrinth zu minimieren. Dazu weisen sie in der Regel mehrere analog aufgebaute und in Strömungsrichtung des Arbeitsfluids nacheinander angeordnete Dichtelemente für den zwischen dem Rotor und dem Stator ausgebildeten, abzudichtenden Trennspalt auf. Jedes Dichtelement besteht zumindest aus einer Drosselstelle und einer stromab anschliessenden Wirbelkammer, welche bei den verschiedensten Labyrinthdichtungen mehr oder weniger stark ausgeprägt sind. Durch Aneinanderreihen von Dichtelementen lässt sich der Durchflusswiderstand beliebig vergrössern und damit die durch die Dichtung hindurchtretende Fluidmenge klein halten.

Aus dem Lehrbuch "Berührungsfreie Dichtungen" von K. Trutnovsky, VDI-Verlag GmbH, Düsseldorf 1981, 4. Aufl., ISBN3-18-400490-2, S. 244/245, Bild 4-58 und 4-59 sind Labyrinthdichtungen bekannt, bei denen die den Drosselstellen gegenüberliegende Fläche eine besondere strömungstechnische Ausbildung erfährt. So weisen diese Flächen kegelige Erweiterungen mit anschliessenden Hohlwulst-Flächen bzw. gekrümmte Einbuchtungen auf. Damit lässt sich sowohl der Strömungsweg bis zur nächsten Drosselstelle verlängern als auch ein gerades Durchschiessen von Stromfäden durch den Spalt verhindern, wodurch letztlich der durch die Dichtung hindurchtretende Fluid-Massenstrom weiter verringert werden kann.

Aus US-1,505,647 ist eine Labyrinthdichtung bekannt, bei der sowohl auf dem Rotor als auch auf dem Stator Dichtelementpakete als gesonderte Bauteile aufgebracht sind, was einen hohen Fertigungsaufwand mit sich bringt. Diese Dichtelementpakete weisen jeweils Dichtzähne auf die weit in den Trennspalt zwischen Stator und Rotor hinein ragen und in montiertem Zustand einander gegenüberliegen, so dass sie als Drosselstelle wirken. Dies macht die Konstruktion sehr spielempfindlich. Die Dichtzähne des Rotors stehen senkrecht vom rotierenden Bauteil ab, so dass die Zwischenräume zwischen den Zähnen etwa senkrecht zur Hauptströmungsrichtung ausgerichtet sind. Die Dichtzähne des Stators dagegen stehen diagonal der Hauptströmungsrichtung entgegen, so dass die Zwischenräume zwischen den Dichtzähnen geneigt in Richtung der Hauptströmung ausgerichtet sind.

In US-4,513,975 ist eine Labyrinthdichtung offenbart, bei der vom scheibenförmigen Rotor ringförmige Dichtzähne in den Trennspalt abstehen. Der Stator umfasst einen ringförmigen Tragteil auf dem trennspaltseitig eine Abdeckung angebracht ist. Auf der der Abdeckung und dem Trennspalte gegenüberliegenden Seite weist das Tragteil Kammern auf, die jeweils mittels zwei voneinander getrennten Öffnungen im Tragteil und diesen zugeordneten Kanälen in der Abdeckung mit dem Trennspalt in Verbindung stehen. Die Dichtzähne des Rotors wirken mit den gegenüberliegenden Flächen des zweiteilig ausgebildeten Stators als Drosselstelle zusammen und teilen den Trennspalt in mehrere hintereinander liegende Spaltkammern. Das von einer ersten Spaltkammer durch eine Drosselstelle in eine zweite Spaltkammer strömende Fluid trifft auf die der Drosselstelle gegenüberliegende Seite des nächsten Dichtzahnes bzw. auf die Rotorwand von der der Dichtzahn absteht. Das Fluid strömt zum Teil durch die nächste Drosselstelle und zum Teil durch die Öffnung der Abdeckung und des Tragteils in die mit dieser Spaltkammer verbundene etwa senkrecht zur Hauptströmungsrichtung angeordneten Kammer im Tragteil, von wo aus sie ebenfalls in die nächste Spaltkammer strömt. Der vielteilige Aufbau mit den Kammern im Stator und den Bohrungen in der Statorabdeckung und dem Tragteil des Stators sind wiederum mit einem hohen Fertigungsaufwand verbunden.

Gemeinsam ist all diesen bekannten Labyrinthdichtungen dass infolge der sich ausbildenden Strömungsgrenzschichten im fluiddurchströmten Trennspalt zwischen dem rotierenden und dem stehenden Bauteil eine hohe Reibleistung auftritt. Dies führt zu einer Erwärmung des Arbeitsfluids im Trennspalt und damit gleichfalls zur Erwärmung der den Trennspalt umgebenden Bauteile. Auf diese Weise können die Materialtemperaturen relativ stark ansteigen, was eine verringerte Standzeit der betroffenen Bauteile zur Folge hat. Zudem führen die Umlenkung und die Verwirbelung des durch den Trennspalt strömenden Arbeitsfluids an den Drosselstellen zu einer immer wieder neuen Durchmischung des Arbeitsfluids, verbunden mit einem hohen Impuls- und Wärmeaustausch. Stromab der Drosselstelle muss das Arbeitsfluid am rotierenden Bauteil jeweils von neuem in Umfangsrichtung beschleunigt werden, wodurch die Reibleistung und damit die Wärmeentwicklung in diesem Bereich weiter steigt.

### Darstellung der Erfindung

Die Erfindung versucht, alle diese Nachteile zu vermeiden. Ihr liegt die Aufgabe zugrunde, ein verbessertes Verfahren zum berührungsfreien Abdichten des zwischen einem Rotor und einem Stator ausgebildeten Trennspalts zu schaffen, mit dem die Standzeit der beteiligten Bauteile erhöht werden kann. Zudem soll eine Vorrichtung zur Durchführung des Verfahrens aufgezeigt werden.

Erfindungsgemäss wird dies dadurch erreicht, dass bei einem Verfahren gemäss dem Oberbegriff des Anspruchs 1 die Strömungsschichten des Arbeitsfluids nach dem Drosselvorgang in einen ersten Teilstrom mit hoher Umfangsgeschwindigkeit sowie in einen zweiten Teilstrom mit niedriger Umfangsgeschwindigkeit aufgeteilt werden. Anschliessend wird der erste Teilstrom lediglich umgelenkt, nur der zweite Teilstrom verwirbelt und schliesslich parallel zum umgelenkten ersten Teilstrom in diesen eingeleitet. Dazu ist die Gegenfläche, auf welche das Arbeitsfluid stromab der Drosselstelle auftrifft, als Strömungsteiler für dieses Arbeitsfluid ausgebildet. Die Wirbelkammer schliesst entgegen der Haupt-Strömungsrichtung an den Strömungsteiler an. Dagegen sind der Zufuhrkanal für das nächste Dichtelement oder der Abführkanal in Haupt-Strömungsrichtung an den Strömungsteiler anschliessend angeordnet. Zudem weist die Wirbelkammer eine grössere innere Oberfläche als der an diese anschliessende Teil des Trennspaltes auf, der als Zufuhr- bzw. Abführkanal ausgebildet ist.

Durch die Strömungsteilung, d.h. die Trennung der an der stehenden Wand des Stators ausgebildeten Strömungsschicht mit relativ niedriger Umfangsgeschwindigkeit von der an der rotierenden Wand des Rotors ausgebildeten Strömungsschicht mit relativ hoher Umfangsgeschwindigkeit in zwei Teilströme, kann die Reibleistung sowie der Impuls- und Wärmeaustausch zwischen den Schichten vermindert werden. Der zweite, mit niedriger Umfangsgeschwindigkeit ausgestattete Teilstrom wird vom Strömungsteiler in die Wirbelkammer abgeschält und dort verwirbelt. Der dabei erreichte Druckabbau vergrössert die Dichtwirkung des Labyrinths. In der Wirbelkammer gibt das Arbeitsfluid des zweiten Teilstroms einen Teil der Reibungswärme an die umgebende Wand des Stators ab.
Demgegenüber wird der erste, mit hoher Umfangsgeschwindigkeit ausgestattete Teilstrom durch den Strömungsteiler lediglich umgelenkt, so dass er weitgehend ungestört durch den Trennspalt fliessen kann. Auf diese Weise wird neben der Reibleistung auch die Wärmeübertragung in die rotierende Wand des Rotors reduziert.

Einerseits kann mit dem erfindungsgemässen Verfahren und der entsprechenden Vorrichtung, bei einer mit dem Stand der Technik vergleichbaren Dichtwirkung, eine Minimierung der entstehenden Reibleistung und des Wärmestroms in den Rotor oder andererseits, bei einer vergleichbaren thermischen Belastung des Rotors, eine verbesserte Dichtwirkung erreicht werden.

Durch die aufeinander folgende Anordnung von zumindest zwei Dichtelementen werden die Ausbildung von Strömungsschichten mit unterschiedlichen Umfangsgeschwindigkeiten im Arbeitsfluid, der anschliessende Drosselvorgang des Arbeitsfluids, die nachfolgende Aufteilung des Fluids in zwei Teilströme mit unterschiedlichen Umfangsgeschwindigkeiten und sowohl die daran anschliessende Umlenkung des ersten Teilstroms als auch die Verwirbelung nur des zweiten Teilstroms sowie dessen parallele Einleitung in den umgelenkten ersten Teilstrom, in dieser Reihenfolge zumindest zweimal nacheinander durchgeführt. Damit kann die Abdichtung des Trennspalts weiter verbessert werden.

Besonders vorteilhaft besteht der Strömungsteiler aus zumindest zwei Teilflächen des Stators, welche eine erhabene und in den Trennspalt hineinragende Berührungskante aufweisen. Damit ist ein relativ einfacher und kostengünstiger Aufbau des Strömungsteilers gewährleistet.

Zudem ist es besonders zweckmässig, wenn die Wirbelkammer in einem Winkel α von 45° ± 20° zur Haupt-Strömungsrichtung des Arbeitsfluids ausgebildet ist. Dadurch ergibt sich eine plötzliche Querschnittserweiterung des Trennspaltes stromab der Drosselstelle und somit eine Förderung der Wirbelbildung im zweiten, mit niedriger Umfangsgeschwindigkeit ausgestatteten Teilstrom. Auf diese Weise kann eine verbesserte Dichtwirkung des Dichtelements erreicht werden.

Der Zufuhrkanal sowie der Abführkanal weisen eine Spaltweite und die Drosselstelle eine lichte Weite auf, wobei die Spaltweite stets grösser ausgebildet ist, als die lichte Weite der Drosselstelle. Damit ist die Dichtwirkung des Dichtelements relativ unabhängig von Veränderungen der Spaltweite des Trennspalts.

Schliesslich wird das Dichtelement in einer Strömungsmaschine angeordnet und die Drosselstelle axial, radial oder diagonal zu deren Maschinenachse ausgebildet. Dadurch ist vorteilhaft ein relativ grosses Anwendungsspektrum der erfindungsgemässen Lösung gegeben.

In einer Ausgestaltungsform der Erfindung sind der Rotor als Verdichterrad eines Radialverdichters und der Stator als eine das Verdichterrad maschinenseitig abschliessende Zwischenwand des Radialverdichters ausgebildet. Das Dichtelement ist zwischen einer Rückwand des Verdichterrades sowie der Zwischenwand und die Drosselstelle parallel zur Maschinenachse des Radialverdichters angeordnet. Wegen der hohen Umfangsgeschwindigkeiten von etwa 500 m/s an der Rückwand von Radialverdichtern sind die positiven Auswirkungen der Vorrichtung auf die Standzeit der entsprechenden Bauteile bzw. auf die Abdichtung besonders gross.

### Kurze Beschreibung der Zeichnung

In der Zeichnung ist ein Ausführungsbeispiel der Erfindung anhand einer an der Verdichterradrückwand des Radialverdichters eines Turboladers angeordneten Labyrinthdichtung dargestellt.

Es zeigen:
- Fig. 1: einen Teillängsschnitt durch einen Radialverdichter des Standes der Technik;
- Fig. 2: eine Prinzipskizze zweier nacheinander angeordneter, erfindungsgemässer Dichtelemente;
- Fig. 3: einen vergrösserten Ausschnitt des Radialverdichters gemäss Fig. 1, jedoch mit der erfindungsgemässen Labyrinthdichtung;
- Fig. 4: eine Darstellung gemäss Fig. 3, jedoch mit diagonal zur Maschinenachse angeordneter Drosselstelle.

Es sind nur die für das Verständnis der Erfindung wesentlichen Elemente gezeigt. Nicht dargestellt sind beispielsweise die Leitung zur Abführung des durch die Labyrinthdichtung hindurchtretenden Arbeitsfluids, die Turbinenseite und die Lagerung des Turboladers. Die Strömungsrichtung der Arbeitsmittel ist mit Pfeilen bezeichnet.

### Weg zur Ausführung der Erfindung

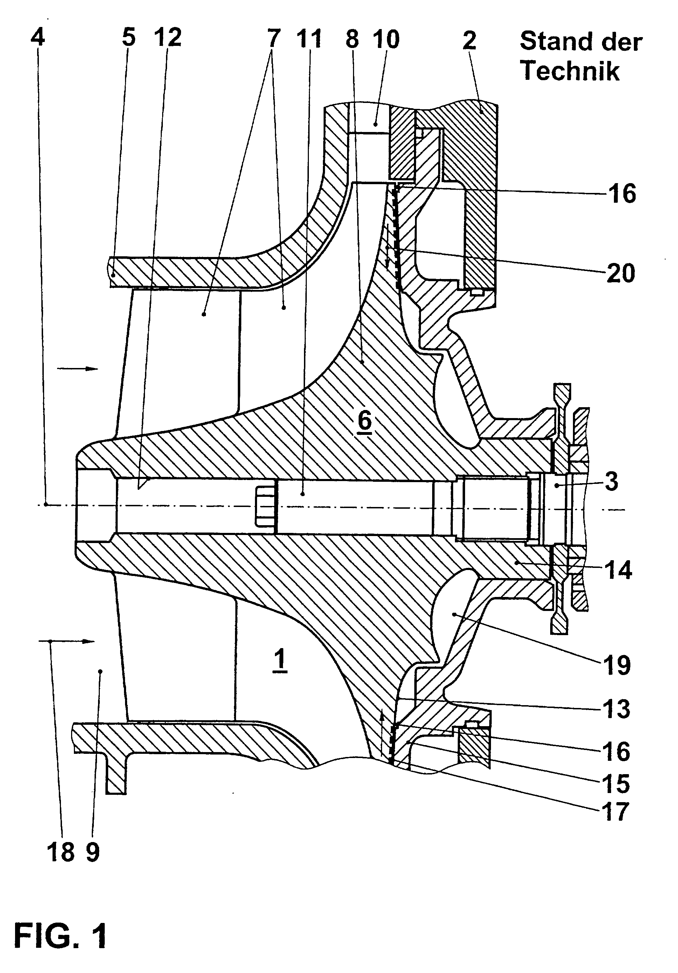

Der in Figur 1 nur teilweise gezeigte Abgasturbolader des Standes der Technik besteht aus einem Radialverdichter 1 und einer nicht dargestellten Abgasturbine, welche über eine in einem Lagergehäuse 2 abgestützte Welle 3 miteinander verbunden sind. Der Radialverdichter 1 des Abgasturboladers weist eine in der Welle 3 liegende Maschinenachse 4 auf. Er ist mit einem Verdichtergehäuse 5 ausgestattet, in dem ein als Verdichterrad ausgebildeter Rotor 6 drehbar mit der Welle 3 verbunden ist. Das Verdichterrad 6 besitzt eine mit einer Vielzahl von Laufschaufeln 7 besetzte Nabe 8. Zwischen der Nabe 8 und dem Verdichtergehäuse 5 ist ein Strömungskanal 9 ausgebildet. Stromab der Laufschaufeln 7 schliesst an den Strömungskanal 9 ein radial angeordneter, beschaufelter Diffusor 10 an, welcher seinerseits in eine nicht dargestellte Spirale des Radialverdichters 1 mündet.

In der Nabe 8 ist eine zentrale, ein Wellenende 11 der Welle 2 aufnehmende Durchgangsbohrung 12 ausgebildet. Turbinenseitig weist die Nabe 8 eine Rückwand 13 sowie eine Befestigungsmuffe 14 für das Wellenende 11 auf, wobei letzteres und die Befestigungsmuffe 14 miteinander verschraubt sind. Natürlich kann auch eine andere geeignete Verdichterrad-Wellen-Verbindung, beispielsweise ohne Durchgangsbohrung 13, gewählt werden. Ebenso ist auch der Einsatz eines unbeschaufelten Diffusors möglich.

Das Lagergehäuse 2 und das Verdichtergehäuse 5 sind mittels eines als Zwischenwand ausgebildeten Stators 15 voneinander getrennt, welcher auch die Befestigungsmuffe 14 der Nabe 8 des Verdichterrades 6 aufnimmt. Zwischen der Rückwand 13 des im Betrieb rotierenden Verdichterrades 6 und der feststehenden Zwischenwand 15 ist ein vorwiegend radial zur Maschinenachse 4 angeordneter Trennspalt 16 ausgebildet. Letzterer nimmt eine als Kammlabyrinth ausgebildete Labyrinthdichtung 17 auf, welche den Trennspalt 16 gegen das Durchströmen eines diesen beaufschlagenden Arbeitsfluids 18 des Radialverdichters 1 abdichtet. Stromab der Labyrinthdichtung 17 kommuniziert der Trennspalt 16 mit einem Zwischenraum 19, welcher seinerseits mit einer nicht dargestellten Abführleitung verbunden ist.

Bei Verwendung einer solchen Labyrinthdichtung 17 entsprechender Länge kann nur ein vorbestimmter, geringer Massenstrom des Arbeitsfluids 18 durch die Dichtung hindurch in den Zwischenraum 19 gelangen. Dieses Arbeitsfluid 18 wird schliesslich über die am Zwischenraum 19 anschliessende Abführleitung entfernt.

Demgegenüber besteht die Labyrinthdichtung 17 bei der erfindungsgemässen Lösung aus mehreren, in Haupt-Strömungsrichtung 20 des durch die Labyrinthdichtung 17 strömenden Arbeitsfluids 18 hintereinander angeordneten, Dichtelementen 21, mit jeweils einer Drosselstelle 22, einer Wirbelkammer 23 und mit einer an der Zwischenwand 15 befindlichen Gegenfläche 24, auf welche das Arbeitsfluid 18 stromab der Drosselstelle 22 auftrifft. Die Gegenfläche 24 ist als Strömungsteiler für das Arbeitsfluid 18 ausgebildet. Sie besteht aus zwei gekrümmten Teilflächen 25, 26 der Zwischenwand 15, welche jeweils auf einem unterschiedlichen Radius angeordnet sind und eine gemeinsame, erhabene und in den Trennspalt 16 hineinragende Berührungskante 27 aufweisen.

Zur genauen Positionierung des Strömungsteilers 24 muss die Auftreffstelle des Arbeitsfluids 18 stromab der Drosselstelle 22 bestimmt werden, wobei unterschiedlich ausgeformte Dichtelemente voneinander differierende Auftreffstellen aufweisen. Dazu sind entsprechende Strömungsversuche erforderlich, wobei natürlich vorteilhaft auch strömungsmechanische Rechenmethoden genutzt werden können.

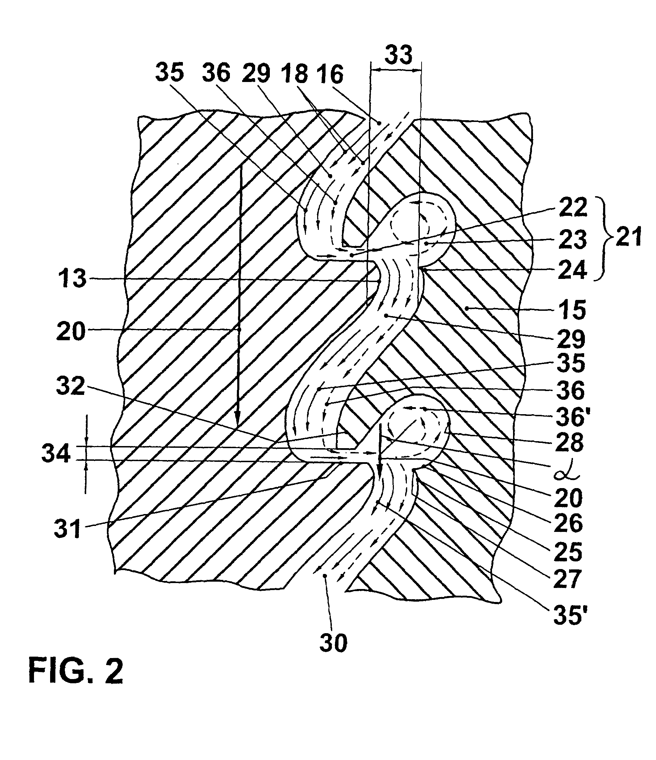

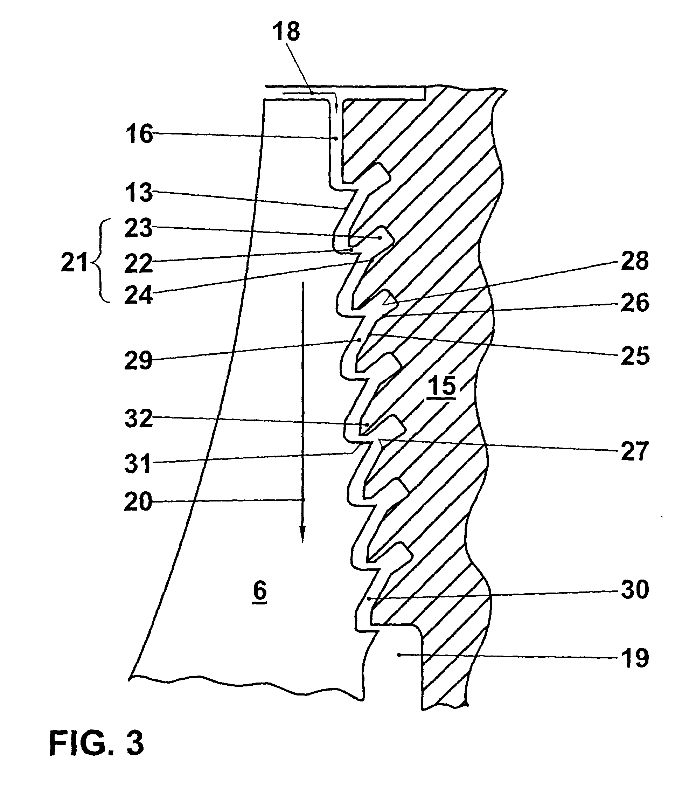

Die Wirbelkammer 23 schliesst an den Strömungsteiler 24, genauer an dessen zweite, auf grösserem Radius angeordnete Teilfläche 26 an und ist selbst auf einem grösseren Radius als diese angeordnet. Zudem ist die Wirbelkammer 23 mit einer grösseren inneren Oberfläche 28 versehen als der an diese anschliessende und als Zufuhrkanal 29 für das strom abfolgende Dichtelement 21 dienende Teil des Trennspaltes 16. Die Wirbelkammer 23 ist in einem Winkel α von etwa 45° zur Haupt-Strömungsrichtung 20 des Arbeitsfluids 18 angeordnet (Fig. 2). Ihr Querschnitt bei einem Schnittentlung der Längsachse 4 durch die Wirbelkammer 23 ist kreisrund ausgebildet, kann aber auch eine andere geeignete Form aufweisen, wie das beispielsweise in Figur 3 mit einem vorwiegend rechteckigen Querschnitt gezeigt ist. Der Winkel α, in dem die Wirbelkammer 23 zur Haupt-Strömungsrichtung 20 angestellt ist, kann in beide Richtungen um 20° differieren. Natürlich sind auch grössere Abweichungen möglich, jedoch mit geringerem Effekt. Ebenso können die beiden Teilflächen 25, 26 auch gerade ausgebildet sein (Fig. 3).

Stromauf jedes Dichtelements 21 ist der Trennspalt 16 als ein im wesentlichen radial ausgerichteter Zufuhrkanal 29 und stromab des letzten Dichtelements 21 als ein ebenfalls im wesentlichen radial ausgerichteter Abführkanal 30 ausgebildet. Der Zufuhrkanal 29 bzw. der Abführkanal 30 schliessen unmittelbar an die auf geringerem Radius angeordnete, erste Teilfläche 25 an.

Die Drosselstellen 22 sind als Axialspalte ausgebildet, so dass die Zufuhrkanäle 29 jeweils eine Umlenkung in die axiale Richtung erfahren. Dazu ist je Drosselstelle 22 an der Rückwand 13 des Verdichterrades 6 ein axial ausgerichteter, rotierender Absatz 31 ausgebildet, welcher mit einem im wesentlichen parallel dazu ausgerichteten, stillstehenden Dichtfinger 32 der Zwischenwand 15 korrespondiert. Dabei kann die Breite des Dichtfingers 32 wesentlich geringer als die des rotierenden Absatzes 31 ausgebildet sein, wobei eine hinreichende Überdeckung mit dem Absatz 31 bei allen Betriebszuständen gewährleistet sein muss. Natürlich können statt des Dichtfingers 32 auch andere geeignete Elemente, wie beispielsweise Dichtstreifen oder Bürstendichtungen (nicht dargestellt) verwendet werden. Die Zufuhrkanäle 29 bzw. der Abführkanal 30 weisen eine Spaltweite 33 und die Drosselstelle 22 eine lichte Weite 34 auf, wobei die Spaltweite 33 stets grösser als die lichte Weite 34 ausgebildet ist.

Beim Betrieb des Turboladers saugt das Verdichterrad 6 als Arbeitsfluid 18 Umgebungsluft an, die über den Strömungskanal 9 sowie den Diffusor 10 in die Spirale gelangt, dort verdichtet und schliesslich zur Aufladung einer nicht dargestellten, mit dem Turbolader verbundenen Brennkraftmaschine eingesetzt wird. Auf ihrem Weg vom Strömungskanal 9 zum Diffusor 10 beaufschlagt die Umgebungsluft 18 auch den Trennspalt 16 und gelangt somit über den Zufuhrkanal 29 in die Labyrinthdichtung 17, d.h. zunächst zu deren erstem Dichtelement 21.

Durch den Einfluss der rotierenden Rückwand 13 des Verdichterrades 6 einerseits und der stillstehenden Zwischenwand 15 andererseits, werden in der durch den Trennspalt 16 strömenden Umgebungsluft 18 Strömungsschichten 35 mit relativ grosser Umfangsgeschwindigkeit sowie Strömungsschichten 36 mit relativ geringer Umfangsgeschwindigkeit ausgebildet. Die Strömungsschichten 35, 36 konzentrieren sich jeweils an der für ihre Ausbildung massgeblichen Wand 13, 15 des Trennspalts 16.

Da die Spaltweite 33 des Trennspalts 16 grösser als die lichte Weite 34 der Drosseistelle 22 ausgebildet ist, werden die an den Wänden 13, 15 anliegenden Grenzschichten nicht zusammengedrückt, so dass es lediglich zu einer geringen Reibleistung kommt und die negative Wärmeentwicklung ebenfalls niedrig bleibt. Zudem ist die Dichtwirkung des Dichtelements 21 relativ unabhängig von Veränderungen der Spaltweite 33 des Trennspalts 16.

Im Bereich der Drosselstelle 22 wird die Umgebungsluft 18 in axiale Richtung umgelenkt sowie beschleunigt und trifft stromab der Drosselstelle 22 auf den an der Zwischenwand 15 angeordneten Strömungsteiler 24. Dabei werden die Strömungsschichten 35, 36 unterschiedlicher Umfangsgeschwindigkeit in zwei separate Teilströme 35', 36' mit dementsprechend unterschiedlichen Umfangsgeschwindigkeiten aufgespalten. Die erste, auf einem kleineren Radius angeordnete Teilfläche 25 der Zwischenwand 15 lenkt den mit einer grösseren Umfangsgeschwindigkeit versehenen, ersten Teilstrom 35' direkt in den Zufuhrkanal 29 des folgenden Dichtelements 21 oder in den Abführkanal 30 um. Demgegenüber schält die zweite, auf einem grösseren Radius angeordnete Teilfläche 26 den zweiten, mit niedriger Umfangsgeschwindigkeit ausgestatteten Teilstrom 36' in die Wirbelkammer 23 ab. Dort wird der zweite Teilstrom 36' zunächst verwirbelt und anschliessend, parallel zum ersten Teilstrom 35', in den Zufuhrkanal 29 bzw. in den Abführkanal 30 eingeleitet. Aufgrund der Rotationsbewegung der Rückwand 13 kommt es stromab der vereinigten Strömung des Arbeitsfluids 18 erneut zur Ausbildung von zwei Strömungsschichten 35, 36 unterschiedlicher Umfangsgeschwindigkeit, welche gemeinsam zum zweiten Dichtelement 21 weitergeleitet werden.

In Abhängigkeit von der Ausbildung der Labyrinthdichtung 17, d.h. entsprechend der Anzahl der Dichtelemente 21, wiederholt sich der bereits beschriebene Vorgang erneut. Stromab des letzten Dichtelementes 21 werden die beiden Teilströme 35', 36' in den Zwischenraum 19 und von dort aus mittels der Abführleitung letztlich an die Umgebung abgegeben.

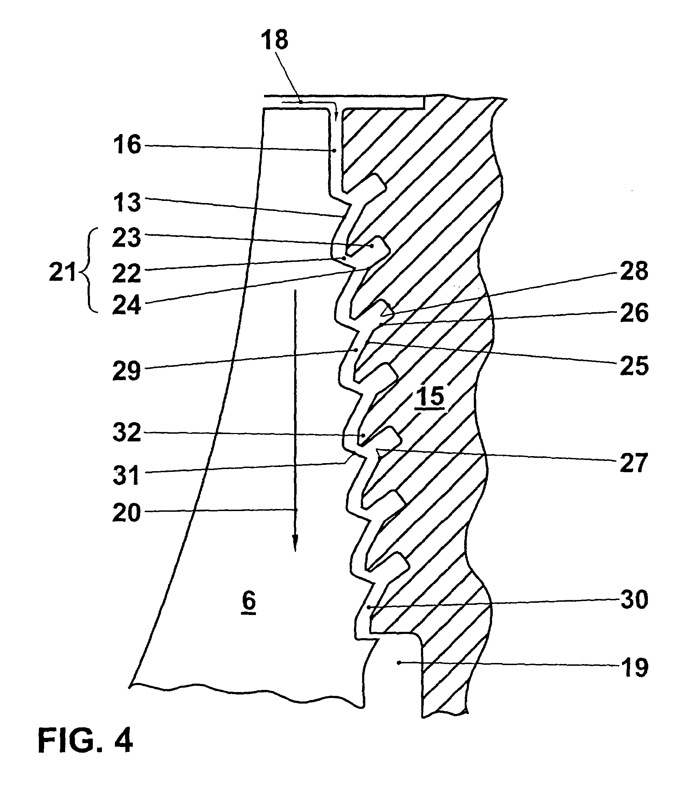

Natürlich kann die erfindungsgemässe Vorrichtung auch in einer anderen Strömungsmaschine, beispielsweise einer Gasturbine, einer Dampfturbine oder im Radialverdichter einer Kältemaschine eingesetzt werden. Auch ist die Verwendung anderer Arbeitsfluide 18 möglich. Dabei kann der Trennspalt 16 auch parallel zur Maschinenachse 4 angeordnet und damit die Drosselstelle 22 als Radialspalt ausgebildet sein (nicht dargestellt). Sowohl bei einem radial als auch bei einem parallel zur Maschinenachse 4 angeordneten Trennspalt 16 kann die Drosselstelle 22 diagonal zur Maschinenachse 4 der entsprechenden Strömungsmaschine ausgebildet werden (Fig. 4). Die wesentlichen Verfahrensschritte verlaufen dabei jeweils analog den bereits beschriebenen Abläufen.

### Bezugszeichenliste

- 1: Radialverdichter
- 2: Lagergehäuse
- 3: Welle
- 4: Maschinenachse
- 5: Verdichtergehäuse
- 6: Rotor, Verdichterrad
- 7: Laufschaufel
- 8: Nabe
- 9: Strömungskanal
- 10: Diffusor
- 11: Wellenende
- 12: Durchgangsbohrung
- 13: Rückwand
- 14: Befestigungsmuffe
- 15: Stator, Zwischenwand
- 16: Trennspalt
- 17: Labyrinthdichtung
- 18: Arbeitsfluid, Umgebungsluft
- 19: Zwischenraum
- 20: Haupt-Strömungsrichtung
- 21: Dichtelement
- 22: Drosselstelle
- 23: Wirbelkammer
- 24: Gegenfläche, Strömungsteiler
- 25: Teilfläche, erste
- 26: Teilfläche, zweite
- 27: Berührungskante
- 28: innere Oberfläche
- 29: Zufuhrkanal
- 30: Abführkanal
- 31: Absatz
- 32: Dichtfinger
- 33: Spaltweite, von 29 bzw. 30
- 34: lichte Weite, von 22
- 35: Strömungsschicht (hohe Umfangsgeschwindigkeit)
- 36: Strömungsschicht (niedrige Umfangsgeschwindigkeit)
- 35': Teilstrom, erster
- 36': Teilstrom, zweiter
- α: Winkel von 23 zu 20

## Patentansprüche

1. Verfahren zum berührungsfreien Abdichten eines zwischen einem Rotor (6) und einem Stator (15) ausgebildeten Trennspalts (16) gegen das Durchströmen eines den Trennspalt beaufschlagenden Arbeitsfluids (18), bei dem das Arbeitsfluid (18) im Trennspalt (16) zunächst gedrosselt, anschliessend umgelenkt und verwirbelt wird, wobei noch vor dem Drosselvorgang im Arbeitsfluid (18) Strömungsschichten (35, 36) mit unterschiedlichen Umfangsgeschwindigkeiten ausgebildet werden, **dadurch gekennzeichnet, dass** die Strömungsschichten (35, 36) des Arbeitsfluids (18) nach dem Drosselvorgang in einen ersten Teilstrom (35') mit hoher Umfangsgeschwindigkeit sowie in einen zweiten Teilstrom (36') mit niedriger Umfangsgeschwindigkeit aufgeteilt werden, der erste Teilstrom (35') lediglich umgelenkt, nur der zweite Teilstrom (36') verwirbelt und schliesslich parallel zum umgelenkten ersten Teilstrom (35') in diesen eingeleitet wird.

2. Verfahren nach Anspruch 1, **dadurch gekennzeichnet, dass** der Drosselvorgang des Arbeitsfluids (18), seine nachfolgende Aufteilung in zwei Teilströme (35', 36') mit unterschiedlichen Umfangsgeschwindigkeiten und sowohl die daran anschliessende Umlenkung des ersten Teilstroms (35') als auch die Verwirbelung nur des zweiten Teilstroms (36') sowie dessen parallele Einleitung in den umgelenkten ersten Teilstrom (35'), in dieser Reihenfolge zumindest zweimal nacheinander durchgeführt werden.

3. Vorrichtung zum berührungsfreien Abdichten eines zwischen einem Rotor (6) und einem Stator (15) ausgebildeten Trennspalts (16) gegen das Durchströmen eines den Trennspalt in einer Haupt-Strömungsrichtung beaufschlagenden Arbeitsfluids (18), bei welcher im Trennspalt (16) zumindest ein aus einer Drosseisteile (22), einer am Stator (15) befindlichen Gegenfläche (24), auf welche das Arbeitsfluid (18) stromab der Drosselstelle (22) auftrifft, sowie einer Wirbelkammer (23) bestehendes Dichtelement (21) angeordnet ist, der Trennspalt (16) stromauf jedes Dichtelements (21) als ein Zufuhrkanal (29) und stromab des letzten Dichtelements (21) als ein Abführkanal (30) ausgebildet ist, **dadurch gekennzeichnet, dass** die Gegenfläche (24) als Strömungsteiler für das Arbeitsfluid (18) ausgebildet ist, die Wirbelkammer (23) entgegen der Haupt-Strömungsrichtung (20) und der Zufuhrkanal (29) für das nächste Dichtelement (21) oder der Abführkanal (30) in Haupt-Strömungsrichtung (20) an den Strömungsteiler (24) anschliessend angeordnet sind.

4. Vorrichtung nach Anspruch 3, **dadurch gekennzeichnet, dass** der Strömungsteiler (24) aus zumindest zwei Teilflächen (25, 26) des Stators (15) besteht, welche eine erhabene und in den Trennspalt (16) hineinragende Berührungskante (27) aufweisen.

5. Vorrichtung nach Anspruch 4, **dadurch gekennzeichnet, dass** die Wirbelkammer (23) eine grössere innere Oberfläche (28) aufweist als der an diese anschliessende Teil des Trennspaltes (16), der für das stromabliegende nächste Dichtelement (21) als Zufuhrkanal (29) dient.

6. Vorrichtung nach Anspruch 5, **dadurch gekennzeichnet, dass** die Wirbelkammer (23) in einem Winkel α von 45° ± 20° zur Haupt-Strömungsrichtung (20) des Arbeitsfluids (18) ausgebildet ist.

7. Vorrichtung nach Anspruch 3, **dadurch gekennzeichnet, dass** der Zufuhrkanal (29) sowie der Abführkanal (30) eine Spaltweite (33) und die Drosselstelle (22) eine lichte Weite (34) aufweisen, wobei die Spaltweite (33) grösser als die lichte Weite (34) der Drosselstelle (22) ausgebildet ist.

8. Strömungsmaschine mit einer Maschinenachse und einer Vorrichtung zum Abdichten eines zwischen Rotor und Stator ausgebildeten Trennspaltes, **dadurch gekennzeichnet, dass** die Vorrichtung nach einem der Ansprüche 3 bis 7 ausgebildet ist.

9. Strömungsmaschine nach Anspruch 8, **dadurch gekennzeichnet**, die Drosselstelle (22) axial, radial oder diagonal zur Maschinenachse (4) ausgebildet ist.

10. Strömungsmaschine nach Anspruch 8 oder 9, **dadurch gekennzeichnet, dass** sie einen Rotor (6) enthält, ausgebildet als Verdichterrad eines Radialverdichters (1), dass sie einen Stator (15) enthält, ausgebildet als eine das Verdichterrad (6) maschinenseitig abschliessende Zwischenwand des Radialverdichters (1), und dass das Dichtelement (21) zwischen einer Rückwand (13) des Verdichterrades (6) sowie der Zwischenwand (15) und die Drosselstelle (22) parallel zur Maschinenachse (4) des Radialverdichters (1) angeordnet ist.

## Claims

1. Method for sealing off a separating gap (16), formed between a rotor (6) and a stator (15), in a non-contacting manner, from the throughflow of a working fluid (18) admitted to the separating gap, in which method the working fluid (18) is first of all choked in the separating gap (16), then deflected and swirled, flow layers (35, 36) having different circumferential velocities being formed in the working fluid (18) before the choking action, **characterized in that** the flow layers (35, 36) of the working fluid (18) are divided after the choking action into a first partial flow (35') having a high circumferential velocity and a second partial flow (36') having a low circumferential velocity, the first partial flow (35') is merely deflected, only the second partial flow (36') is swirled and is finally directed parallel to the deflected first partial flow (35') into the latter.

2. Method according to Claim 1, **characterized in that** the choking action of the working fluid (18), its subsequent division into two partial flows (35', 36') having different circumferential velocities and both the subsequent deflection of the first partial flow (35') and the swirling of only the second partial flow (36') as well as the parallel directing of the latter into the deflected first partial flow (36') are carried out at least twice one after the other in this sequence.

3. Arrangement for sealing off a separating gap (16), formed between a rotor (6) and a stator (15), in a non-contacting manner from the throughflow of a working fluid (18) admitted to the separating gap in a main flow direction, in which arrangement at least one sealing element (21), consisting of a choke point (22), an opposing surface (24), which is located on the stator (15) and on which the working fluid (18) impinges downstream of the choke point (22), and a vortex chamber (23), is arranged in the separating gap (16), and the separating gap (16) is designed as a feed duct (29) upstream of each sealing element (21) and as a discharge duct (30) downstream of the last sealing element (21), **characterized in that** the opposing surface (24) is designed as a flow divider for the working fluid (18), the vortex chamber (23) is arranged in the opposite direction to the main flow direction (20), and the feed duct (29) for the next sealing element (21) or the discharge duct (30) are arranged so as to adjoin the flow divider (24) in the main flow direction (20).

4. Arrangement according to Claim 3, **characterized in that** the flow divider (24) consists of at least two sectional surfaces (25, 26) of the stator (15), which have a raised contact edge (27) projecting into the separating gap (16).

5. Arrangement according to Claim 4, **characterized in that** the vortex chamber (23) has a larger inner surface (28) than the part of the separating gap (16) adjoining the vortex chamber (23), which part serves as feed duct (29) for the next sealing element (21) lying downstream.

6. Arrangement according to Claim 5, **characterized in that** the vortex chamber (23) is formed at an angle α of 45° ± 20° to the main flow direction (20) of the working fluid (18).

7. Arrangement according to Claim 3, **characterized in that** the feed duct (29) and the discharge duct (30) have a gap width (33), and the choke point (22) has a clearance width (34), the gap width (33) being designed to be larger than the clearance width (34) of the choke point (22).

8. Fluid-flow machine having a machine axis and an arrangement for sealing off a separating gap formed between rotor and stator, **characterized in that** the arrangement is designed according to one of claims 3 to 7.

9. Fluid-flow machine according to Claim 8, **characterized in that** the choke point (22) is formed axially, radially or diagonally relative to the machine axis (4).

10. Fluid-flow machine according to Claim 8 or 9, **characterized in that** it contains a rotor (6) designed as a compressor impeller of a radial compressor (1), **in that** it contains a stator (15) designed as an intermediate wall of the radial compressor (1), which intermediate wall closes off the compressor impeller (6) on the machine side, and **in that** the sealing element (21) is arranged between a rear wall (13) of the compressor impeller (6) and the intermediate wall (15), and the choke point (22) is arranged parallel to the machine axis (4) of the radial compressor (1).

## Revendications

1. Procédé d'étanchéité sans contact d'un intervalle de séparation (16) formé entre un rotor (6) et un stator (15) pour empêcher le passage d'un fluide de travail (18) alimentant l'intervalle de séparation, dans lequel le fluide de travail (18) dans l'intervalle de séparation (16) est d'abord étranglé, puis dévié et soumis à des turbulences, dans lequel encore avant l'opération d'étranglement, dans le fluide de travail (18) sont formées des couches d'écoulement (35, 36) avec des vitesses périphériques différentes, **caractérisé en ce que** les couches d'écoulement (35, 36) du fluide de travail (18) sont subdivisées, après l'opération d'étranglement, en un premier courant partiel (35') avec une vitesse périphérique élevée ainsi qu'en un second courant partiel (36') avec une vitesse périphérique plus basse, le premier courant partiel (35') étant simplement dévié, le second courant partiel (36') étant seul soumis à des turbulences et, finalement, introduit parallèlement au premier courant partiel dévié (35') dans celui-ci.

2. Procédé selon la revendication 1, **caractérisé en ce que** l'opération d'étranglement du fluide de travail (18), sa subdivision ultérieure en deux courants partiels (35', 36') avec différentes vitesses périphériques et autant la déviation consécutive du premier courant partiel (35') que l'application de turbulences uniquement au second courant partiel (36') ainsi que son introduction parallèle dans le premier courant partiel dévié (35'), sont réalisées dans cet ordre au moins à deux reprises l'une après l'autre.

3. Dispositif d'étanchéité sans contact d'un intervalle de séparation (16) formé entre un rotor (6) et un stator (15) pour empêcher le passage d'un fluide de travail (18) alimentant l'intervalle de séparation dans un sens d'écoulement principal, dans lequel, dans l'intervalle de séparation (16), est agencé au moins un élément d'étanchéité (21) constitué d'un point d'étranglement (22), d'une contre-surface (24) se trouvant sur le stator (15), sur laquelle le fluide de travail (18) tombe en aval du point d'étranglement (22), ainsi que d'une chambre de turbulence (23), l'intervalle de séparation (16) se présente en amont de chaque élément d'étanchéité (21) sous la forme d'un canal d'alimentation (29) et en aval du dernier élément d'étanchéité (21) sous la forme d'un canal d'évacuation (30), **caractérisé en ce que** la contre-surface (24) se présente sous la forme d'un diviseur de courant pour le fluide de travail (18), la chambre de turbulence (23) est agencée à la suite à l'opposé du sens d'écoulement principal (20) et le canal d'alimentation (29) pour l'élément d'étanchéité suivant (21) ou le canal d'évacuation (30) dans le sens d'écoulement principal (20) sur le diviseur de courant (24).

4. Dispositif selon la revendication 3, **caractérisé en ce que** le diviseur de courant (24) est constitué d'au moins deux surfaces partielles (25, 26) du stator (15), qui présente une arête de contact (27) profilée faisant saillie dans l'intervalle de séparation (16).

5. Dispositif selon la revendication 4, **caractérisé en ce que** la chambre de turbulence (23) présente une surface interne (28) plus importante que la partie de l'intervalle de séparation (16) qui s'y raccorde et qui sert à l'élément d'étanchéité (21) suivant en aval comme canal d'alimentation (29).

6. Dispositif selon la revendication 5, **caractérisé en ce que** la chambre de turbulence (23) forme un angle α de 45°±20° avec le sens d'écoulement principal (20) du fluide de travail (18).

7. Dispositif selon la revendication 3, **caractérisé en ce que** le canal d'alimentation (29) ainsi que le canal d'évacuation (30) ont un écartement (33) et le point d'étranglement (22) a un diamètre intérieur (34), l'écartement (33) étant plus grand que le diamètre intérieur (34) du point d'étranglement (22).

8. Turbomachine avec un axe machine et un dispositif pour étancher un intervalle de séparation formé entre un rotor et un stator, **caractérisée en ce que** le dispositif se présente sous une forme selon l'une quelconque des revendications 3 à 7.

9. Turbomachine selon la revendication 8, **caractérisée en ce que** le point d'étranglement (22) se présente sous une forme axiale, radiale ou diagonale par rapport à l'axe machine (4).

10. Turbomachine selon la revendication 8 ou 9, **caractérisée en ce qu'**elle contient un rotor (6) conformé en roue d'un compresseur radial (1), **en ce qu'**elle contient un stator (15) conformé en paroi intermédiaire du compresseur radial (1) isolant la roue de compresseur (6) côté machine et **en ce que** l'élément d'étanchéité (21) est agencé entre une paroi arrière (13) de la roue de compresseur (6) et la paroi intermédiaire (15) et le point d'étranglement (22) parallèlement à l'axe machine (4) du compresseur radial (1).
